# EUROPÄISCHE PATENTSCHRIFT

(11) **EP 2 896 508 B1**
(45) Veröffentlichungstag und Bekanntmachung des Hinweises auf die Patenterteilung: **28.12.2016**
(21) Anmeldenummer: 14151456.2
(22) Anmeldetag: 16.01.2014
(51) Int. Cl.: B42D 15/00, B42D 25/00, G07D 7/00, G06K 19/06, G07D 7/20, B42D 25/305, B42D 25/36, B42D 25/328

(54) **Erkennungssystem für Sicherheitscodierungen**
Recognition system for security codes
Système de détection pour codages de sécurité

(43) Veröffentlichungstag der Anmeldung: 22.07.2015
(73) Patentinhaber: 3S Simons Security Systems GmbH, 48301 Nottuln (DE)
(72) Erfinder: Simons, Rolf, 48301 Nottuln (DE)
(74) Vertreter: DTS Patent- und Rechtsanwälte Schnekenbühl und Partner mbB

(56) Entgegenhaltungen:
- WO-A1-2010/046708
- WO-A2-2008/029175
- WO-A2-2009/049562

## Beschreibung

Die vorliegende Erfindung betrifft zum einen ein Sicherheitsdokument mit Mikropartikel zum fälschungssicheren Kennzeichnen von Dokumenten, insbesondere von Logistikdokumenten, zum anderen ein System und ein Verfahren zum Überprüfen von fälschungssicheren Dokumenten, sowie die Verwendung eines Sicherheitsdokuments in selbigem Verfahren. Das Sicherheitsdokument weist ein Trägersubstrat und einen Sicherheitsbereich zum Tragen von Mikropartikeln auf, die zur fälschungssicheren Kennzeichnung von Dokumenten wenigstens eine Codierung aufweisen und somit eine auslesbare, eineindeutige Spezialanordnung bilden, wobei jedes Mikropartikel seinerseits wenigstens eine erste Schicht aufweist. Dabei bildet die erste Schicht eine außen liegende Seite des Mikropartikels, auf der zumindest ein vorangebrachtes Herkunftszeichen angeordnet ist, und jedes Mikropartikel weist wenigstens eine Fläche auf, die derart beschaffen ist, dass die erste Schicht mit der Codierung lesbar ist.

Nachfolgend sollen unter dem Begriff "Sicherheitsdokument" für den Zweck der vorliegenden Erfindung insbesondere, aber keinesfalls ausschließlich, Logistikdokumente verstanden werden; die Bedeutung des Begriffs beschränkt sich vorliegend nicht auf Logistikdokumente als solche, sondern umfasst beispielsweise auch Wertpapiere und Wertpapierdokumente, Testamentsdokumente, Geschäftsbriefe, Konstruktionspläne, Zahlungsmittel- und Karten, Personalausweise, Urkunden, Zeugnisse, Verträge, aber auch Verpackungsmaterialien und Dokumente alle Art, bei denen ein Plagiatsschutz und/oder Herkunftsnachweis von Bedeutung ist. Unter dem Begriff "Mikropartikel" sollen für den Zweck der vorliegenden Erfindung Partikel verstanden werden, die aus einem Reinstoff, einem Gemisch, aber auch aus einer Verbindung oder schlicht aus einem einzigen Element bestehen können und, nachdem sie auf dem Dokument angeordnet sind, eine zufällige, auslesbare und eineindeutige "Spezialanordnung" bilden. So kann nämlich allein die Spezialanordnung für sich genommen ein für den Menschen erkennbares Unikat bilden. Eine eineindeutige Spezialanordnung kann beispielsweise dadurch entstehen, dass die Mikropartikel in den Grenzen des definierten Sicherheitsbereichs manuell aufgebracht oder mit einem Dispenser, also einer manuellen, halbautomatischen oder automatischen Ausgabevorrichtung, auf das Trägersubstrat aufgebracht werden. Im Falle der automatischen Ausgabe resultiert das Unikat des Endprodukts allerdings zwingend aus einer Randomisierung, also einem vorrichtungsinhärenten Zufallsmechanismus', der für diesen Fall in dem Dispenser enthalten ist. Das Unikat entsteht nicht zuletzt auch durch die Partikel und ihre Oberflächenbeschaffenheit selbst. Da die Mikropartikel vorzugsweise in einem Herstellungsprozess entstehen, in dem die Mikropartikel durch Zerkleinerung eines mehrlagigen Schichtaufbaus gewonnen werden, weisen sie auch eine randomisierte Gestalt und ein oder mehrere Bruchkanten und/oder Schnittkanten auf. Infolgedessen kommen die Mikropartikel in einer ihrer äußeren Gestalt entsprechenden, eigentümlichen Art auf dem Trägersubstrat zum Liegen und/oder haften dort. Diese Charakteristik der Anordnung gibt der Spezialanordnung eine weitere, nicht nachahmbare Eigenart. Der Begriff "Code" bezieht sich auf opto-elektronisch lesbare Schrift, die aus verschieden breiten Strichen und/oder Punkten bestehen kann. Insbesondere fallen darunter Barcodes, QR-Codes oder DataMatrix-Codes, aber auch elektronisch lesbare Zahlenfolgen wie OCR-Codes, RFID-Codes oder irgendwelche Zahlenfolgen, welche durch ihre Folge einen Code-Inhalt bilden, wie zum Beispiel ein aus dem Zahlungsverkehr bekannter SEPA-Code. Unter dem Begriff "Herkunftszeichen" soll im Weiteren ein Zeichen verstanden werden, welches klar einem Ursprung oder Urheber zuordbar ist, also beispielsweise auch ein Markenzeichen oder Logo sein kann. Der Begriff "optische Detektionsvorrichtung" bezieht sich auf das Lesen der Mikropartikel durch den Anwender und auf durch einen Anwender dazu verwendete Hilfsmittel. So kann es sich dabei um eine Vorrichtung mit wenigstens einem optischen Vergrößerungsmittel wie einer Lupe oder einem Stabmikroskop handeln, insbesondere bei der manuellen Verarbeitung durch den Menschen, aber auch um teil- und voll- automatisierte optische Scanner zur Erkennung von charakteristischen Eigenschaften wie Farbe, Farbfolge, Lage, Größe und Form von Mikropartikeln. Der Begriff des "vorangebrachten Herkunftszeichens" ist breit auszulegen. Insbesondere ist denkbar, dass im Zusammenhang mit dem Herstellungsschritt der Zerkleinerung zur Herstellung der Mikropartikel ein vorangebrachtes Herkunftszeichen nur noch teilweise erkennbar ist, was jedoch als vollkommen ausreichend im Sinne der Erfindung zu erachten ist. Grundsätzlich ist es wünschenswert und vorteilhaft, wenn wenigstens ein Herkunftszeichen vollständig ersichtlich ist, was jedoch zur Ausführung der Erfindung nicht zwingend erforderlich ist. Möglich ist auch, dass mehrere Herkunftszeichen ganz oder teilweise vorgesehen sind, die auf dieser außen liegenden Seite angeordnet sind.

Das erfindungsgemäße System dient der Herstellung von fälschungssicheren Dokumenten der vorstehend beschriebenen Art und deren Überprüfung, wobei jene Dokumente mit einem Sicherheitscode zu einem Sicherheitsdokument und somit fälschungssicher gemacht wurden. Das vorgenannte Verfahren beinhaltet ein datenbankgestütztes Hinterlegen von Informationen, insbesondere von Identifikationsdatensätzen, welche eine Codierung und eine Spezialanordnung von Mikropartikeln auf einem Sicherheitsdokument enthalten. Schließlich betrifft die vorliegende Erfindung die Verwendung des erfindungsgemäßen Sicherheitsdokuments in einem solchen datenbankgestützten Verfahren.

Die Produktpiraterie sowie der sichere Versand der Produkte und Waren im weltweiten Handel ist nach wie vor ein großes Problem. Warensendungen verschwinden oder, was bekanntlich sehr häufig vorkommt, Warensendungen werden in der Versandkette ausgetauscht und mit gefälschten Versand- bzw. Frachtdokumenten versehen. Die Folgen sind nicht nur für die Empfänger ein großes Problem; auch den Zollbehörden, den Versicherungsunternehmen und den Finanzbehörden entgehen so Milliardensummen.

Speziell bei Importen ist die deutsche Zollverwaltung mit ihrer Zentralstelle Gewerblicher Rechtsschutz (ZGR) einer der wichtigsten Partner der Industrie. Die ZGR koordiniert bundesweit das Grenzbeschlagnahmeverfahren, das von Firmen beantragt werden kann. Dieses Verfahren erlaubt es den Zollbehörden, schutzrechtsverletzende Waren aus dem Verkehr zu ziehen. Üblicher Weise bedarf es im Rahmen der Verdachtserhärtung dazu zum Teil aufwändiger Rückverfolgung und teilweise langwieriger Gutachten um Fälschungen nachzuweisen. Das alles kostet viel Zeit und Geld.

Das Hauptproblem und die Schwachstellen in dieser Versandkette von Waren jeglicher Art vom Produzenten bzw. Absender zum Empfänger sind im Wesentlichen auch, dass die Versand- bzw. Frachtpapiere bis heute ohne große Probleme gefälscht werden können. Damit ist dem Betrug nach wie vor Tür und Tor geöffnet.

Fälschungssichere Dokumente gibt es z.B. als Wertpapiere, Ausweispapiere, Zertifikate, Zeugnisse, Echtheitsbescheinigungen, Abstammungsurkunden in der Tierzucht und ähnliches. Selbst Geldscheine können als ein solches Dokument betrachtet werden. Derartige Papiere haben typische fälschungssichere Merkmale, wie man sie auch auf Geldscheinen findet, also ein- oder aufgebrachte Hologramme, Sicherheitsstreifen, bestimmte Stoffeigenschaften und dergleichen sowie versteckte Sicherheitsmerkmale, die man nur mit Hilfsmitteln erkennen kann.

Aber auch die generelle Unterscheidung von Originalwaren und von gefälschten Waren ist ein immer größer werdendes Problem. Dieses Problem wird insbesondere dadurch verstärkt, dass nachgemachte bzw. gefälschte Waren qualitativ immer besser werden und äußerlich teilweise kaum mehr von den Originalwaren unterscheidbar sind. Darüber hinaus ist auch festzustellen, dass sich das Problem der Produkt- und Markenpiraterie nicht mehr nur im Wesentlichen auf z. B. nachgeahmte bzw. gefälschte Kleidung erstreckt, sondern zunehmend auch in sicherheitskritischen Bereichen, wie beispielsweise bei Kraftfahrzeug- und Flugzeugersatzteilen, oder auch im Pharmabereich, d.h. z.B. durch gefälschte Arzneimittel, auftritt.

Die Bereitstellung fälschungssicherer Erkennungsmerkmale für Originalwaren gewinnt daher zunehmend an Bedeutung.

Die DE 26 51 528 A1 offenbart diesbezüglich farbcodierte Kenn-Mikroteilchen, die aus mehreren farbigen Schichten in einer vorgewählten Farbfolge bestehen, wobei die Farbfolge einen Kenncode darstellt. Die Mikroteilchen werden dabei aus Melamin-Alkyd-Harz hergestellt, wobei sieben Farbschichten übereinander mit einer Dicke von 91,4 µm auf eine Polyesterträgerfolie von 50,8 µm aufgebracht werden.

Aus der US 4,390,452 sind ferner Mikropartikel einer einheitlichen Dicke von ca. 140 µm bekannt, wobei auf einer Oberfläche des Mikropartikels nach dem Zusammenfügen der mehreren Schichten Buchstaben und Zahlen aufgebracht werden.

Die WO 2007/106512 A2 offenbart ebenfalls Mikropartikel, bestehend aus mehreren Schichten, die zudem mehrere Farben aufweisen.

Die US 6,952,994 B2 offenbart ein Identifikationsetikett, auf dem ein Hologramm aufgebracht ist.

Aus der EP 0 832 477 B1 ist ferner ein Verfahren zur Herstellung von mehrschichtigen Mikropartikeln bekannt, wobei auf einem bahn- oder bogenförmigen Träger nacheinander mehrere Kennzeichnungsschichten aufgetragen werden, wobei das Auftragen jeder Kennzeichnungsschicht in flüssiger Form erfolgt, und wobei nach dem Auftragen jeder Kennzeichnungsschicht eine Trocknung und/oder Härtung erfolgt, bevor die nächste Kennzeichnungsschicht aufgetragen wird, bis ein Schichtenstapel mit einer gewünschten Art und Folge von Kennzeichnungsschichten gebildet ist, wobei in einem nächsten Schritt der Träger- und der Schichtenstapel voneinander getrennt werden und der Schichtenstapel unter Erhaltung der vollen Kennzeichnungsschichtenfolge zu mehrschichtigen Mikropartikeln zerkleinert wird.

Aus der EP 1 003 146 B1 ist ferner ein Verfahren zur Sicherung und Kennzeichnung von Produkten unter Verwendung von Mikropartikeln bekannt. Dabei werden für jedes Produkt zwei oder mehr verschieden codierte Mikropartikel-Gruppen verwendet.

Wünschenswert wäre es jedoch, die vorstehend beschriebenen Kennzeichnungssysteme noch sicherer zu machen, insbesondere im Hinblick auf die Nachahmungssicherheit noch weiter zu verbessern.

Das Patentdokument WO 2010/046708 A1 offenbart ein Sicherheitsdokument nach der Oberbegriff des Anspruchs 1.

Es ist daher die Aufgabe der vorliegenden Erfindung, ein Sicherheitsdokument und ein Erkennungssystem für Sicherheitscodierungen anzugeben, und eine entsprechende Verwendung eines solchen Sicherheitsdokuments in vorteilhafter Weise dahingehend weiterzubilden, dass die Nachahmungssicherheit von Mikropartikeln und insbesondere von Sicherheitsdokumenten erhöht wird und zugleich die Überprüfung erleichtert und intuitiver gestaltet wird.

Diese Aufgabe wird bei einem Erkennungssystem für Sicherheitscodierungen der eingangs genannten Art durch ein Sicherheitsdokument mit Mikropartikeln mit den Merkmalen des Patenanspruchs 1 gelöst. Demnach ist vorgesehen, dass das Sicherheitsdokument wie folgt beschaffen ist: es weist ein Trägersubstrat und einen Sicherheitsbereich zum Tragen von Mikropartikeln auf, die zur fälschungssicheren Kennzeichnung von Dokumenten wenigstens eine Codierung aufweisen und somit eine auslesbare, eineindeutige Spezialanordnung bilden, wobei jedes Mikropartikel wenigstens eine erste Schicht aufweist, welche eine außen liegende Seite des Mikropartikels bildet, auf der zumindest ein vorangebrachtes Herkunftszeichen angeordnet ist, wobei jedes Mikropartikel eine randomieserte Form aufweist, und wobei jedes Mikropartikel wenigstens eine Fläche aufweist, die derart beschaffen ist, dass die erste Schicht mit der Codierung lesbar ist.

Grundsätzlich ist auch denkbar, dass ein Herkunftszeichen nicht nur auf dieser einen außen liegenden Seite der ersten Schicht angebracht ist, sondern dass zusätzlich auch auf weiteren außen liegenden Seiten, zumindest auf einer weiteren außen liegenden Seite ein weiteres vorangebrachtes Herkunftszeichen angeordnet ist. Darüber hinaus kann die Aufbringung der Mikropartikel mittels einer Lösung, Suspension oder Paste erfolgen. Weiter hilft der definierte Sicherheitsbereich, der sich an beliebiger Stelle des Dokuments befinden kann, dabei die Mikropartikel welche für das bloße Auge nur schwer zu erkennen sind zu lokalisieren. Dabei kann die Umgrenzung des Sicherheitsbereichs mit sichtbaren oder mit magnetischen oder auf UV/IR-Licht fluoreszierenden Farben ausgeführt sein. Das Mikropartikel kann insbesondere auch ein Mikropartikel zur fälschungssicheren Kennzeichnung von Produkten sein. Ein solches Mikropartikel kann beispielsweise an einem Produkt mit Hilfe eines Lackes angebracht werden. Alternativ kann ein solches Mikropartikel auch in einem Produkt angebracht werden, beispielsweise in einer Bohrung oder durch Einbringung in den Werkstoff, aus dem das Produkt zumindest teilweise besteht. Das Mikropartikel kann im Wesentlichen aus Melamin-Alkyd-Polymeren bestehen.

Die erfindungsgemäße Lösung weist eine ganze Reihe wesentlicher Vorteile gegenüber den aus dem Stand der Technik bekannten Kennzeichnungssystemen auf. So wird durch die vorgenannten Merkmale eine direkte, maschinelle oder insbesondere manuelle Sicherung von Sicherheitsdokumenten selbst für kleine Auflagen oder Einzelstücke möglich. Daraus resultiert zum einen eine kostengünstige Produkt- oder Dokumentensicherung und, durch die erzeugten Unikate, zum anderen ein sehr guter Plagiatsschutz mit einer erhöhten Nachahmungssicherheit. Zugleich wird die Überprüfung der Mikropartikel erleichtert und intuitiver gestaltet, insbesondere dadurch, dass zusätzlich nun ein Herkunftszeichen auf der außen liegenden Seite des Mikropartikels angebracht ist, das z.B. unter Zuhilfenahme eines Vergrößerungsmittels wie einer Lupe oder eines Stabmikroskops ersichtlich ist.

All die eingangs genannten Sicherheitsmerkmale unterscheiden sich von dem Sicherheitsdokument im Sinne dieser Erfindung dadurch, dass einzelne Sicherheitsmerkmale - da sie meist auf bekannte Druckverfahren beruhen - leicht nachgemacht werden können oder erst in der Kombination mehrerer unterschiedlicher Sicherheitsmerkmale das Dokument fälschungssicherer machen. Das typische Beispiel dafür ist der Geldschein, der deshalb so viele unterschiedliche Sicherheitsmerkmale trägt. Faktisch wird bei Geldscheinen auch erst dann jeder Geldschein zu einem Unikat, wenn er eine Serien-Nummer erhält, die jedoch auch wiederum leicht zu fälschen ist.

Bei dem erfindungsgemäßen Sicherheitsdokument wird das Trägersubstrat bei jedem Aufbringen der Mikropartikel automatisch zum Unikat, bedingt durch den einzigartigen Farbcode der Mikropartikel und aufgrund der immer anderen Lage der Mikropartikel beim Aufbringen auf das Trägersubstrat. Es bedarf also keiner Serien-Nummer, um das Dokumentenpapier zu einem Unikat zu machen. Das ist der entscheidende Vorteil für ein international einsetzbares und absolut fälschungssicheres Sicherungssystems, wie es hier beschrieben wird.

Vorteilhafte Weiterbildungen der Erfindung sind in den Unteransprüchen angegeben.

So ist beispielsweise vorgesehen, dass die Mikropartikel in den Grenzen des Sicherheitsbereichs nach einem mindestens eindimensionalen Code, insbesondere nach einem zweidimensionalen Code, angeordnet sind. Eine solche Codierung steigert die Komplexität des Codes und erhöht damit die Fälschungssicherheit.

Um eine gute Lesbarkeit des Endprodukts sicherzustellen, ist vorzugsweise vorgesehen, dass die Mikropartikel in dem Sicherheitsbereich derart angeordnet und ausgebildet sind, dass mittels eines optischen Verfahrens Mikropartikel größer 8 µm und Farbschichtdicken von bis zu 7 µm hinsichtlich ihrer Farbe, Farbfolge, Lage, Größe und Form lesbar sind. Dies kann in an sich bekannter Weise beispielsweise durch eine transparente Lösung, Suspension oder Paste mit oder ohne adhäsive Eigenschaften erfolgen. Die Anordnung der Partikel resultiert weiter aus der im Rahmen des Herstellungsprozesses durchgeführten Zerkleinerung der Mikropartikel.

Bevorzugter Weise ist vorgesehen, dass jedes Mikropartikel mit jeder seiner Abmessungen ca. 100 µm nicht überschreitet. In Anbetracht dessen, dass das Herkunftszeichen auf der ersten Schicht vorangebracht ist, ergibt sich dadurch der Vorteil, dass beim Herstellungsverfahren des Mikropartikels überhaupt erst die Größe von weniger als ca. 100 µm erreicht wird. Durch den Umstand, dass das Mikropartikel mit jeder seiner Abmessungen ca. 100 µm nicht überschreitet, ergibt sich insbesondere der Vorteil, dass die Nachahmung von Mikropartikeln erschwert bis unmöglich gemacht wird, da beispielsweise der Aufwand für Fälscher zu groß wird. Die Abmessungen des Mikropartikels sind insbesondere die Länge, Breite und Tiefe des Mikropartikels, die jeweils ca. 100 µm nicht überschreiten. Mikropartikel dieser Größe haben den weiteren Vorteil, dass sie für das menschliche Auge nahezu unsichtbaren Schutz bieten.

Um eine komplexe Fälschungssicherung zu erzeugen kann vorgesehen sein, dass jedes Mikropartikel wenigstens eine zweite Schicht aufweist, die über der ersten Schicht angeordnet ist, und zwar derart, dass die übereinander liegenden Schichten mit den Codierungen lesbar sind.

Weiter ist möglich, dass die zweite Schicht eine Farbschicht ist. Eine Farbschicht bietet den Vorteil, dass sie die Unterscheidungskraft verbessert und je nach verwendetem Farbraum mehrere Millionen Farbkombinationen ermöglicht, wodurch die Nachahmungssicherheit weiter verbessert wird.

Es kann des Weiteren vorgesehen sein, dass das Mikropartikel wenigstens eine Fläche aufweist, die derart beschaffen ist, dass die übereinander liegenden Schichten ersichtlich sind. Eine derartige Fläche kann beispielsweise eine Bruchkante und/oder Schnittkante sein oder zumindest teilweise durch eine Bruchkante und/oder Schnittkante gegebildet sein. Durch die übereinander liegenden Schichten kann beispielsweise eine Codierung ausgebildet sein, die durch die Fläche ersichtlich wird und somit optisch überprüfbar wird.

Ferner ist möglich, dass das Mikropartikel mit jeder seiner Abmessungen ca. 50 µm, vorzugsweise ca. 20 µm und besonders bevorzugt ca. 8 µm nicht überschreitet. In einem Fall, in dem das Mikropartikel mit jeder seiner Abmessungen ca. 8 µm nicht überschreitet, kann die erste Schicht insbesondere durch ein sogenanntes Transfermaterial ausgebildet werden. Ein derartiges Transfermaterial kann beispielsweise ein Heißtransfer bzw. ein Bügelbild oder dergleichen sein.

Grundsätzlich ist denkbar, dass jegliche Größe der Abmessungen im Bereich zwischen ca. 8 µm bis ca. 100 µm gewählt werden kann. Insbesondere ist es dabei vorteilhaft, dass das zumindest eine Zeichen vollständig auf der außenliegenden Fläche der ersten Schicht ersichtlich bleibt und die Abmessungen des Mikropartikels dementsprechend gewählt werden. Es ist somit denkbar, dass das Mikropartikel mit jeder seiner Abmessungen ca. 100 µm nicht überschreitet, aber auch mit jeder seiner Abmessungen ca. 8 µm nicht unterschreitet.

Außerdem kann vorgesehen sein, dass die erste Schicht durch eine Polyesterfolie, insbesondere ein PET-Folie ausgebildet ist, wobei vorzugsweise die Polyesterfolie bzw. insbesondere die PET-Folie eine Schichtstärke im Bereich zwischen ca. 5 µm bis 15 µm, vorzugsweise von ca. 7 µm aufweist.

In vorteilhafter Weise kann ferner vorgesehen sein, dass wenigstens eine weitere Schicht vorgesehen ist, die auf der zweiten Schicht aufgetragen und/oder angeordnet ist. Diese weitere Schicht kann auch eine Farbschicht sein.

Vorzugsweise ist möglich, dass mehrere weitere Schichten vorgesehen sind, die auf der zweiten Schicht aufgetragen und/oder angeordnet sind, wobei die weiteren Schichten vorzugsweise auch Farbschichten sind, so dass die zweite Schicht und die weiteren Schichten eine Anordnung von Schichten ergeben. Dabei ist die Anordnung derart beschaffen, dass durch die Schichten ein Farbcode ausgebildet wird, wobei die Schichten vorzugsweise jeweils eine Schichtstärke im Bereich zwischen ca. 0,5 µm bis ca. 15 µm, beispielsweise zwischen ca. 8 µm bis 10 µm, vorzugsweise zur Herstellung kleiner Mikropartikel ca. 0,8 µm, aufweisen.

Der Farbcode kann derart beschaffen sein, dass er eindeutig einem Hersteller und/oder einem Produkt zugeordnet werden kann. Denkbar ist, dass der Farbcode durch einen Schichtaufbau von fünf bis zwölf Schichten aufgebaut ist. Vorzugsweise werden Schichtanzahlen von zehn oder elf Schichten gewählt, um eine weitreichende Codierungsmöglichkeit zu erhalten. Dann nämlich, wenn der Farbcode durch einen Schichtaufbau von bis zu zwölf Schichten aufgebaut ist, kann die erste der zwölf Schichten eine Schicht mit wenigstens einem vorangebrachten Zeichen sein, die weiteren Schichten zwei bis elf Farbschichten und die zwölfte Schicht erneut eine Schicht mit wenigstens einem vorangebrachten Zeichen sein. Zusätzlich zu normalen Farbcodes sind darüber hinaus Farben verwendbar, die auf ultraviolettes und Infrarot-Licht reagieren. Selbst Farben mit magnetischen Eigenschaften können eingesetzt werden. Dabei sind die Schichten vorzugsweise äußerst temperaturbeständig und/oder auch gegen Lösungsmittel, Chemikalien und Säuren resistent.

Darüber hinaus ist denkbar, dass das Herkunftszeichen zumindest ein Teil eines Hologramms und/oder eines Aufdruckes ist, wobei das Zeichen wenigstens ein Buchstabe und/oder wenigstens ein Teil eines Bildzeichens und/oder wenigstens ein Teil eines Wort-/Bildzeichens, insbesondere eines Logos und/oder Markenzeichens, ist oder ein derartiges Zeichen enthält, und dass das Herkunftszeichen alternativ oder auch auf der zweiten oder einer letzten Schicht angebracht sein kann. Insbesondere ist vorteilhaft möglich, dass es sich zur Kennzeichnung von Originalwaren bei dem Zeichen stets um das Markenzeichen des Originalherstellers handelt.

In bevorzugter Weise ist vorgesehen, dass bei einem Sicherheitsdokument wenigstens 5 Mikropartikel vorgesehen sind, von denen mindestens ein Mikropartikel mit all seinen spezifischen Eigenschaften wie Farbe, Farbfolge, Lage, Größe und Form lesbar ist. Darin besteht der Vorteil, dass bei automatischer Erfassung des Sicherheitsdokuments ein Mindestmaß an Erkennbarkeit und Lesbarkeit sichergestellt ist. Bei automatischer Erfassung wird damit die Fehleranfälligkeit minimiert. Ein weiterer Vorteil einer kleinen Anzahl an Mikropartikeln ist ein schneller und sicherer Scan. Dadurch wird insbesondere auch viermieden, dass Mikropartikel zu eng aneinander oder übereinander liegen und dadurch die zweifelsfreie Bestimmung schwierig oder unmöglich wird.

Ein derartig gesichertes Dokument, auch "Blankoversanddokument" genannt, wird durch die erfindungsgemäße Sicherung zu einem fälschungssicheren Unikat.

Um die Sicherheitsdokumente widerstandsfähiger gegen Umwelteinflüsse zu machen ist vorzugsweise vorgesehen, dass der Sicherheitsbereich mit den Mikropartikeln von einer wasserundurchlässigen Schutzschicht bedeckt ist. Die Schutzschicht bedeckt die Mikropartikel und versiegelt sie. Weiter verhindert die Schutzschicht ein Knicken oder eine Deformation des Sicherheitsbereichs. Dazu verfügt die Schutzschicht über eine ausreichende Steifigkeit. Die Schutzschicht ist vorzugsweise transparent und grundsätzlich wäre auch denkbar, dass die Schutzschicht als optische Vergrößerungsschicht ausgeführt ist und so die Lesbarkeit mit bloßem Auge ermöglicht.

Als Weiterbildung der vorliegenden Erfindung ist auch vorgesehen, dass das Trägersubstrat aus Papier, also im Wesentlichen aus Fasern einer pflanzlichen Herkunft, wie beispielsweise Cellulose oder Baumwolle, oder aus einem Polymer besteht. Papier bietet den Vorteil, dass es mit handelsüblichen Druckern und Schreibmitteln verarbeitet werden kann. Polymerverbindungen sind insbesondere bei Logistikdokumenten dann von Vorteil, wenn diese in Ländern mit einer hohen Luftfeuchtigkeit eingesetzt werden.

Besonders bevorzugt ist vorgesehen, dass das Sicherheitsdokument außerhalb des Sicherheitsbereichs von einem handelsüblichen Drucker bedruckbar ist. Dies bietet den Vorteil, dass die Sicherheitsdokumente (Unikate) leicht weiterverarbeitet und für jegliche der erfindungsgemäßen und eingangs genannten Anwendungsbeispiele verwendet werden können.

Die Erfindung betrifft auch ein System zum Überprüfen eines im Sinne der Erfindung fälschungssicheren Dokuments, wobei ein zum Bedrucken des Sicherheitsdokuments vorgesehener Drucker ein zusätzliches Erfassungsmodul zum Erkennen der Codierungen und der Spezialanordnung aus Mikropartikeln aufweist. Das Erfassungsmodul ist vorzugsweise ein optisches Modul. Dies bietet den Vorteil, dass das fälschungssicher gemachte Dokument (Sicherheitsdokument) mit der Codierung und der Spezialanordnung mit seinen charakteristischen Eigenschaften bei der Weiterverarbeitung erfasst wird. Sobald der Druckvorgang unterbrochen ist, wird die Erfassung angehalten, gestoppt oder verworfen. Weiter bietet dies den Vorteil, dass die Sicherheitsdokumente von einem Anwender individuell weiterverarbeitet und je nach Verwendungszweck eingesetzt werden können.

Um das Dokument von jedem Anwender und jederzeit überprüfbar zu machen, betrifft die Erfindung weiter ein Verfahren zum Überprüfen von einem Sicherheitsdokument, und zwar durch datenbankgestütztes Hinterlegen von Informationen, insbesondere von mindestens einem Identifikationsdatensatz, welcher eine Codierung und eine Spezialanordnung von Mikropartikeln auf dem Sicherheitsdokument aufweist, insbesondere eines hochauflösenden Bildes der Spezialanordnung von Mikropartikeln und ihrer Codierung, die über eine bereitgestellte Website mit einem handelsüblichen Gerät zum Surfen im Internet erreichbar ist.

Jedes fälschungssichere Dokument kann jederzeit vom Zoll oder Empfänger auf Dokumentenechtheit geprüft werden, da es mit Codierung und Spezialanordnung und optional mit Versanddokumenteninhalt in einer Datenbank abgelegt ist, so dass der Zugriff auf diese Datenbank zur Verifizierung des Originaldokumentes jederzeit möglich wird. Unter Einbeziehung von Siegeln und RFID-Tags oder GPS-Transpondern ist in dieser Kombination eine Fälschungssicherung von Waren vom Versender irgendwo auf dieser Welt bis zum Empfänger oder von anderweiten Anwendungsprodukten sichergestellt.

Weiter ist denkbar, die Versandkette durch den Einsatz von RFIDs, Siegeln oder GPS-Transpondern an, auf und/oder in den Produkten und/oder die komplette Frachteinheit selbst mit einem Plagiatsschutz zu versehen. Dadurch wird beispielsweise ein Vergleich der fälschungssicheren Versand- und Frachtpapiere beim Zoll mit den ausgelesenen Daten, beispielsweise mit den Daten der RFID-Transponder möglich. Damit kann die Herkunft und Echtheit zweifelsfrei überprüft und schneller eine Zollabwicklung ermöglich werden.

Bei der eingesetzten Datenbank kann es sich um eine relationale Datenbank, wie sie im World Wide Web üblich ist, handeln. Dadurch wird dem Nutzer auf einfache Art und Weise ermöglicht, die Authentizität des Dokuments zu überprüfen. So kann er mittels eines Vergleichs des in der Datenbank hinterlegten Identifikationsdatensatzes, insbesondere durch einfachen Vergleich des hinterlegten Bildes, die Originalität unmittelbar feststellen.

Eine vorteilhafte Weiterbildung des erfindungsgemäßen Verfahrens besteht darin, dass die Codierung und/oder die Spezialanordnung mit einer optischen Detektionsvorrichtung lesbar und manuell oder automatisch mit dem in der Datenbank hinterlegten Identifikationsdatensatz vergleichbar sind. Somit kann praktisch jedermann mit einem technischen Hilfsmittel wie einem optischen Scanner, aber mindestens mit einem handelsüblichen optischen Vergrößerungsmittel, die Codierung und/oder die Spezialanordnung lesen und manuell oder automatisch mit dem in der Datenbank hinterlegten Identifikationsdatensatz vergleichen.

So, wie die Erfindung grundsätzlich ohne aufwendige technische Hilfsmittel zur Überprüfung auskommt, ist jedoch auch eine teil- oder vollautomatisierte Verifikation denkbar. Dies ist dann von Vorteil, wenn die Sicherheitsdokumente auch in großem Maßstab oder für beliebig hohe Stückzahlen eingesetzt werden sollen.

Weiter betrifft die Erfindung eine Verwendung eines Sicherheitsdokuments nach einem der Ansprüche 1 bis 12 in einem System nach Anspruch 13 oder in einem Verfahren nach einem der Ansprüche 14 bis 16.

Weitere Einzelheiten und Vorteile der Erfindung sollen nun anhand eines in der Zeichnung dargestellten Ausführungsbeispiels näher erläutert werden.

Es zeigen:
- Fig. 1: Eine Vielzahl von Mikropartikeln gemäß der vorliegenden Erfindung;
- Fig. 2: Eine Draufsicht auf verschiedene Dokumente mit Mikropartikeln;
- Fig. 3: Eine Draufsicht auf ein Sicherheitsdokument mit Sicherheitsbereich.

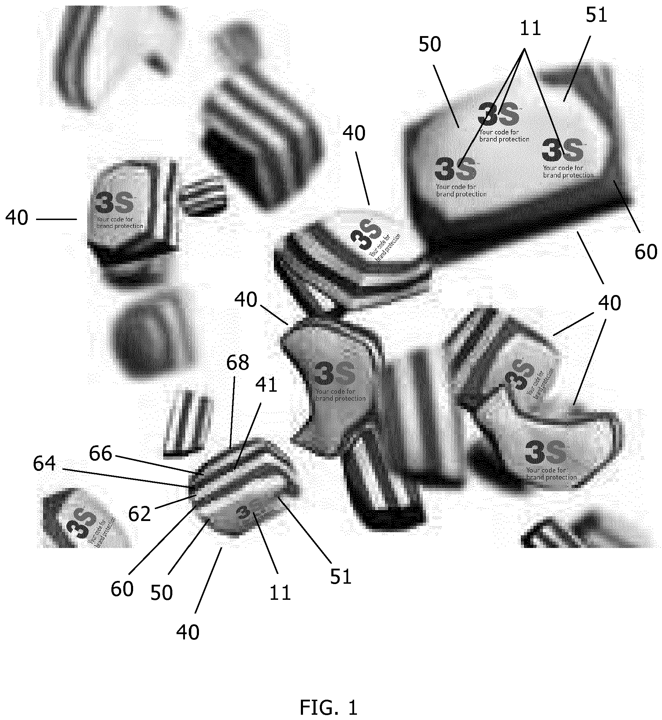

Fig. 1 zeigt eine Vielzahl von Mikropartikeln gemäß der vorliegenden Erfindung, woraus ersichtlich ist, dass die Mikropartikel 40 aufgrund des Zerkleinerungsvorgangs nicht identisch sind, sondern hinsichtlich ihrer Formgebung randomisiert sind, d.h. ihre Formgebung zufällig und nicht vordefiniert ist.

Die Mikropartikel 40 dienen zur fälschungssicheren Kennzeichnung von Produkten und weisen dabei wenigstens eine erste Schicht 50 auf, auf der im Herstellungs-verfahren vorzugsweise weitere Schichten 60, 62, 64, 66, 68 aufgetragen werden. Die erste Schicht 50 ist somit eine Trägerschicht, während die Schichten 60, 62, 64, 66, 68 Farbschichten sind, die auf die Trägerschicht 50 aufgetragen werden.

Die erste Schicht bzw. Trägerschicht 50 bildet eine außen liegende Seite 51 des Mikropartikels 40. Auf dieser außen liegenden Seite 51 ist dabei zumindest ein Zeichen 11, hier ein Logo bzw. die Marke eines Unternehmens, angeordnet. Dieses Zeichen 11 ist dabei bereits im Vorfeld auf der Schicht 50 aufgebracht.

Insbesondere kann es sich bei der Schicht 50 um eine Trägerfolie, insbesondere um eine Polyesterfolie bzw. eine PET-Folie handeln. Die Zeichen 11 können dabei aufgedruckt oder in sonstiger Form auf der Trägerfolie 50 aufgebracht sein. Grundsätzlich ist auch denkbar, dass die Zeichen 11 als Schrift im Nanobereich auf der Trägerschicht 50 aufgebracht sind. Dabei ist auch denkbar, dass die Schrifthöhe oder die Zeichenhöhe 1 nm oder mehr beträgt.

Es ist ferner denkbar, dass die Trägerfolie 50 auf der Seite 51 mehrere Zeichen 11 in Form von Hologrammen oder Aufdrucken aufweist.

Die Mikropartikel 40 sind dabei derart beschaffen, dass sie mit jeder ihrer Abmessungen ca. 100 µm nicht überschreiten, vorzugsweise 50 µm, besonders bevorzugt 8 µm. In dem in Figur 1 gezeigten Ausführungsbeispiel sind die Abmessungen der Mikropartikel 40 im Bereich zwischen ca. 8 µm bis ca. 100 µm gewählt, wobei jedoch diese Untergrenze und Obergrenze nicht unter- bzw. überschritten wird.

Die Schichten 60, 62, 64, 66, 68 sind Farbschichten, hier beispielsweise eine rote Farbschicht 60, eine weiße Farbschicht 62, eine blaue Farbschicht 64, eine weitere weiße Farbschicht 66 und eine schwarze Farbschicht 68.

Das Mikropartikel 40 weist ferner wenigstens eine Fläche 41 auf, die derart beschaffen ist, dass die übereinander liegenden Farbschichten 60, 62, 64, 66, 68 ersichtlich sind. Die Fläche 41 ist eine Seitenfläche, die durch den Zerkleinerungsprozess während der Herstellung des Mikropartikels 40 entsteht, also beispielsweise im Wesentlichen eine Schnittkante oder eine Bruchkante ist.

Die Anordnung dieser Farben bzw. Farbschichten 60, 62, 64, 66, 68 bildet einen Farbcode, der in Kombination mit dem Zeichen 11, hier beispielsweise dem Markenzeichen eines Unternehmens insgesamt einen fälschungssicheren Code ausbildet. Dieser Code kann beispielsweise auf einfache Weise mittels eines Stabmikroskops bzw. Auflichtmikroskops überprüft werden.

Die Mikropartikel 40 können dabei in ein Etikett eingebracht oder auf einem Etikett aufgetragen werden, beispielsweise mittels eines Aufstriches in Form eines Klarlackes oder dergleichen, etwa wie ein transparentes Harz oder ein transparenter Kleber.

Grundsätzlich ist auch denkbar, dass die Mikropartikel 40 in einem Aufstrich, wie beispielsweise einer Farbe oder einem Lack, dispergiert werden und somit direkt auf dem zu kennzeichnenden Produkt aufgebracht werden können.

Zur Herstellung der Mikropartikel 40 wird derart vorgegangen, dass auf der als Trägerschicht fungierenden ersten Schicht 50 nacheinander die Schichten 60, 62, 64, 66, 68 aufgetragen werden, wobei vorzugsweise das Auftragen der Kennzeichnungsschichten 60, 62, 64, 66, 68 in flüssiger Form erfolgt, und wobei nach dem Auftragen jeder Kennzeichnungsschicht 60, 62, 64, 66, 68 eine Trocknung und/oder Härtung erfolgt, bevor die nächste Kennzeichnungsschicht 60, 62, 64, 66, 68 aufgetragen wird. Dies wird solange fortgeführt, bis ein Schichtenstapel mit der gewünschten Art und Folge von Kennzeichnungsschichten ausgebildet ist.

Sodann wird der Schichtenstapel unter Erhaltung der vollen Kennzeichnungsschichtenfolge zu mehrschichtigen Mikropartikeln 40 zerkleinert bzw. vereinzelt.

Das Auftragen der einzelnen Kennzeichnungsschichten erfolgt dabei mittels eines Druckverfahrens, wobei ein Hochdruckverfahren oder ein Tiefdruckverfahren oder ein Flachdruckverfahren oder ein Durchdruckverfahren bzw. Siebdruckverfahren verwendet werden kann.

Grundsätzlich ist auch denkbar, dass das Auftragen jeder Kennzeichnungsschicht 60, 62, 64, 66, 68 statt in flüssiger Form auch in pastöser Form erfolgen kann. Insbesondere ist in diesem Zusammenhang denkbar, dass das Auftragen jeder Kennzeichnungsschicht 60, 62, 64, 66, 68 in einem thixotropen Zustand erfolgt. Möglich ist insbesondere auch, dass als Grundsubstanz für die Kennzeichnungsschichten 60, 62, 64, 66, 68 Glaspulver und/oder Emaille-Pulver mit zugesetzten, hitzebeständigen Farbpigmenten verwendet wird, und dass diese Grundsubstanz vor dem Auftragen durch Zugabe von Transferlack oder Drucköl in pastöse Form gebracht wird.

Allerdings ist es auch möglich, dass das Auftragen jeder Kennzeichnungsschicht 60, 62, 64, 66, 68 statt in flüssiger Form oder pastöser Form auch in trockenem Zustand in Pulverform mittels eines Bronzierverfahrens erfolgt. Insbesondere ist auch bei diesem Verfahren denkbar, dass als Grundsubstanz für die Kennzeichnungsschichten 60, 62, 64, 66, 68 Glaspulver und/oder Emaille-Pulver mit zugesetzten, hitzebeständigen Farbpigmenten verwendet wird.

Des Weiteren kann das Auftragen der einzelnen Kennzeichnungsschichten mittels eines Spritzlackierverfahrens erfolgen. Auch ist denkbar, dass für das Auftragen der einzelnen Kennzeichnungsschichten 60, 62, 64, 66, 68 ein Walzlackierverfahren herangezogen wird.

Besonders vorteilhaft ist es, wenn der auf der Trägerschicht 50 aufgebaute Schichtenstapel, bestehend aus den Kennzeichnungsschichten 60, 62, 64, 66, 68, vor seiner Zerkleinerung getrocknet und/oder gehärtet und/oder getempert wird. Dabei können Trocknung und Härtung bevorzugt durch Wärmeeinwirkung beschleunigt werden. Dieser Schritt der Trocknung und/oder Härtung und/oder Temperung ist zweckmäßig, um vor dem nachfolgenden Zerkleinern des Schichtenstapels in die einzelnen Mikropartikel 40 den einzelnen Schichten in sich und dem Schichtenstapel für diese Zerkleinerung günstige mechanische Eigenschaften zu verleihen. Insbesondere wird dadurch eine relativ hohe Sprödigkeit bei gleichzeitig guter Stabilität und festem Zusammenhalt der Schichten 50, 60, 62, 64, 66, 68 erreicht.

Das Zerkleinern des Schichtenstapels kann auf an sich bekannte Art und Weise, z.B. in geeigneten Mühlen, wie z.B. Kugelmühlen erfolgen. Diese Zerkleinerung erfolgt zweckmäßig nur soweit, dass innerhalb der überwiegenden Zahl der dabei entstehenden Mikropartikel 40 jeweils noch die volle Kennzeichnungsschichtenfolge enthalten ist, um die Identifizierung der mit den Mikropartikeln 40 gekennzeichneten Stoffe oder Gegenstände zweifelsfrei zu ermöglichen. Nach dem Zerkleinerungsvorgang kann zusätzlich auch noch eine Sortierung der Mikropartikel 40 erfolgen, wobei dann diejenigen Mikropartikel, die nicht mehr über die volle Kennzeichnungsschichtenfolge und/oder über ein vollständiges Zeichen 11 verfügen, aussortiert werden, um sie von der weiteren Verwendung für Kennzeichnungszwecke auszuschließen.

Vorteilhafterweise wird dabei die Größe der Mikropartikel 40 in einem Bereich zwischen ca. 8 µm bis ca. 100 µm gewählt, da in diesem Bereich jedenfalls sichergestellt ist, dass wenigstens ein Zeichen 11 auf der außen liegenden Seite 51 der Trägerschicht erkennbar ist.

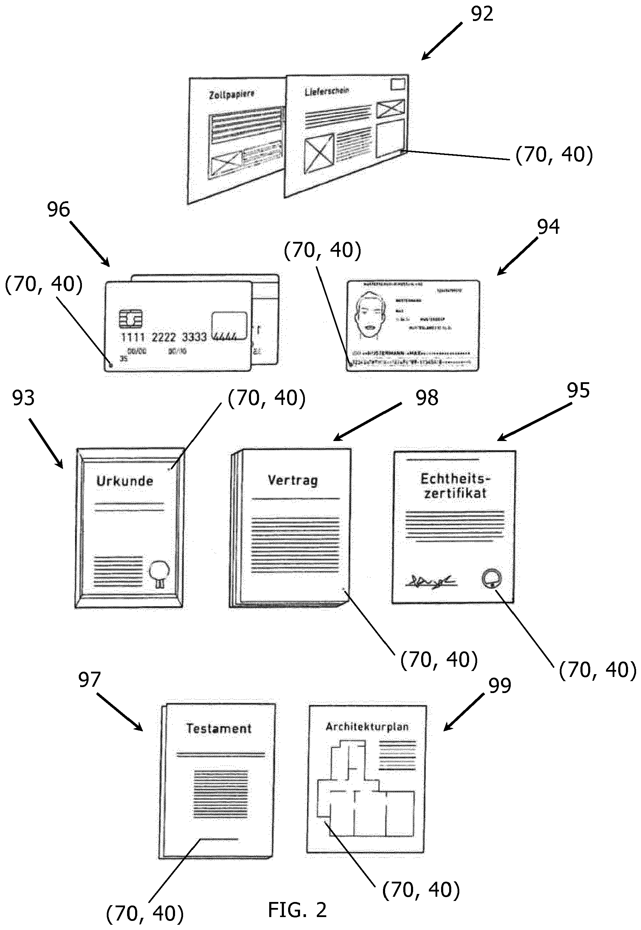

Fig. 2 zeigt Ansichten von verschiedenen Dokumenten, die durch Aufbringen von Mikropartikeln zu Sicherheitsdokumenten gemacht wurden. Ein Sicherheitsdokument kann ein Logistikdokument 92, eine Urkunde 93, ein Ausweisdokument 94, ein Zertifikat 95, eine Zahlkarte 96, ein Testament 97, ein Vertrag 98 oder ein Konstruktionsplan 99 sein. Grundsätzlich ist aber auch jeder weitere Dokumententyp denkbar, bei dem es auf einen Plagiatsschutz und/oder Herkunftsnachweis ankommt, im Prinzip bis hin zu einer Banknote. Mikropartikel 40 und eine Spezialanordnung 70 der Mikropartikel 40 befinden sich auf einer beliebigen, aber in der Regel definierten Stelle eines Dokuments. Das Dokument weist verschiedene Informationsfelder 14 auf, welches Empfänger-, Absender- oder inhaltliche Informationen enthalten kann. Die Mikropartikel 40 können dabei punktförmig aufgebracht sein und/oder eine Linie bilden.

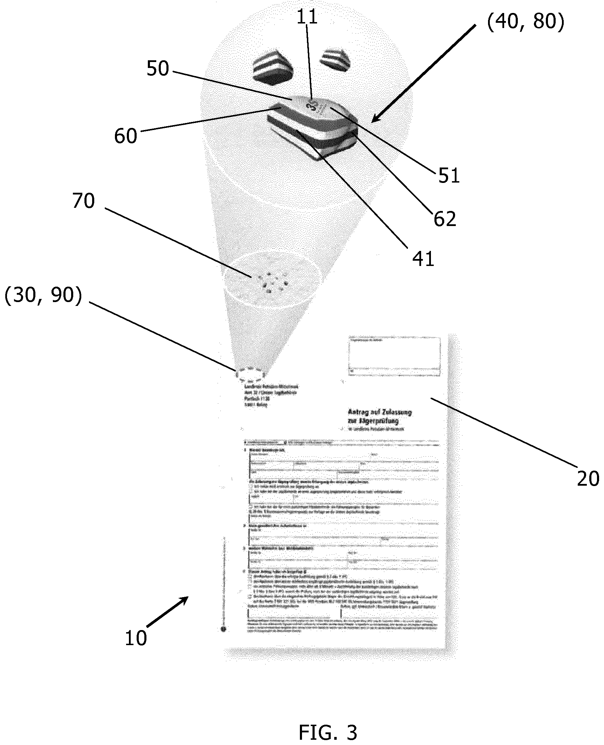

Fig. 3 zeigt eine Draufsicht auf ein Sicherheitsdokument 10 mit einem Sicherheitsbereich 30, der oberhalb der Draufsicht auf das Sicherheitsdokument perspektivisch dargestellt ist. Der Sicherheitsbereich 30 kann von einer Schutzschicht 90 bedeckt sein. Im Sicherheitsbereich 30 findet sich eine Spezialanordnung 70 von Mikropartikeln 40. Die Spezialanordnung 70 ist in einer ersten Vergrößerung dargestellt, welche auch durch die eben genannte Schutzsicht 90 mit optischer Vergrößerungsfunktion erzeugt werden kann. Die Spezialanordnung 70 ist ohne optisches Vergrößerungsmittel mit dem bloßen Auge kaum oder gar nicht erkennbar. Der Sicherheitsbereich 30 kann oval, rund, dreieckig oder mehreckig ausgeführt sein. Die Spezialanordnung 70 von Mikropartikeln 40 bildet ein Unikat. Eine weitere Vergrößerung zeigt die Mikropartikel 40 mit einer Codierung 80. Die Codierung 80 setzt sich aus mehreren Farbschichten 62 zusammen. Das Sicherheitsdokument 10 kann beliebige Informationen enthalten, die vom Absender oder Hersteller des gekennzeichneten Produkts bzw. Dokuments frei gewählt und auf das Sicherheitsdokument 10 gedruckt werden können. Das Sicherheitsdokument kann in einem handelsüblichen Drucker verwendet werden. Das Einlesen der Spezialanordnung 70 kann vom Hersteller vor Auslieferung erfolgen. Das Sicherheitsdokument 10 kann eine Seriennummer aufweisen, die mit sichtbarer Farbe oder mit magnetischer- oder UV/IR-Farbe auf der Vorder- oder Rückseite des Sicherheitsdokuments 10 aufgebracht ist.

### Bezugszeichenliste

- 10: Sicherheitsdokument
- 11: Zeichen
- 14: Informationsfeld
- 20: Trägersubstrat
- 30: Sicherheitsbereich
- 40: Mikropartikel
- 41: Fläche
- 50: Erste Schicht
- 51: außen liegende Seite
- 60: Zweite Schicht
- 62: Weitere Schicht
- 70: Spezialanordnung
- 80: Codierung
- 90: Schutzschicht
- 92: Logistikdokumente
- 94: Ausweisdokument
- 95: Zertifikat
- 96: Zahlkarte
- 98: Verträge
- 99: Konstruktionspläne

## Patentansprüche

1. Sicherheitsdokument (10), mit einem Trägersubstrat (20) und einem Sicherheitsbereich (30) zum Tragen von Mikropartikeln (40), die zur fälschungssicheren Kennzeichnung von Dokumenten wenigstens eine Codierung (80) aufweisen und somit eine auslesbare, eineindeutige Spezialanordnung (70) bilden, wobei jedes Mikropartikel (40) wenigstens eine erste Schicht (50) aufweist, die eine außen liegende Seite (51) des Mikropartikels (40) bildet, auf der zumindest ein vorangebrachtes Herkunftszeichen (11) angeordnet ist, wobei jedes Mikropartikel (40) wenigstens eine Fläche (41) aufweist, die derart beschaffen ist, dass die erste Schicht (50) mit der Codierung (80) lesbar ist; **dadurch gekennzeichnet dass** jedes Mikropartikel (40) eine randomisierte Form aufweist.

2. Sicherheitsdokument (10) nach Anspruch 1, **dadurch gekennzeichnet, dass** die Mikropartikel (40) in den Grenzen des Sicherheitsbereichs (30) nach einem mindestens eindimensionalen Code, insbesondere nach einem zweidimensionalen Code, angeordnet sind.

3. Sicherheitsdokument (10) nach Anspruch 1 oder 2, **dadurch gekennzeichnet, dass** die Mikropartikel (40) in dem Sicherheitsbereich (30) derart angeordnet und ausgebildet sind, dass mittels eines optischen Verfahrens Mikropartikel (40) größer 8 µm und Farbschichtdicken von bis zu 7 µm hinsichtlich ihrer Farbe, Farbfolge, Lage, Größe und Form lesbar sind.

4. Sicherheitsdokument (10) nach einem der vorhergehenden Ansprüche, **dadurch gekennzeichnet, dass** jedes Mikropartikel (40) mit jeder seinen Abmessungen ca. 100 µm nicht überschreitet.

5. Sicherheitsdokument (10) nach einem der vorhergehenden Ansprüche, **dadurch gekennzeichnet, dass** jedes Mikropartikel (40) wenigstens eine zweite Schicht (60) aufweist, die über der ersten Schicht (50) angeordnet ist, derart, dass die übereinander liegenden Schichten mit den Codierungen (80) lesbar sind.

6. Sicherheitsdokument (10) nach Anspruch 5, **dadurch gekennzeichnet, dass** die zweite Schicht (60) eine Farbschicht ist.

7. Sicherheitsdokument (10) nach Anspruch 5 oder 6, **dadurch gekennzeichnet, dass** das Mikropartikel (40) wenigstens eine Fläche (41) aufweist, die derart beschaffen ist, dass die übereinander liegenden Schichten (50, 60) ersichtlich sind, und/oder wobei der Mikropartikel (40) mit jeder seiner Abmessungen ca. 50 µm, vorzugsweise ca. 20 µm, besonders bevorzugt ca. 8 µm nicht überschreitet.

8. Sicherheitsdokument (10) nach einem der vorhergehenden Ansprüche, **dadurch gekennzeichnet, dass** das Herkunftszeichen (11) zumindest ein Teil eines Hologramms und/oder eines Aufdruckes ist, wobei das Herkunftszeichen (11) wenigstens ein Buchstabe und/oder wenigstens ein Teil eines Bildzeichens und/oder wenigstens ein Teil eines Wort-/Bildzeichens, insbesondere eines Logos und/oder Markenzeichens, ist, oder ein derartiges Zeichen enthält, und dass das Herkunftszeichen (11) alternativ oder auch auf der zweiten Schicht (60) angebracht sein kann.

9. Sicherheitsdokument (10) nach einem der vorhergehenden Ansprüche, **dadurch gekennzeichnet, dass** wenigstens 5 Mikropartikel (40) vorgesehen sind, von denen mindestens ein Mikropartikel (40) mit all seinen spezifischen Eigenschaften wie Farbe, Farbfolge, Lage, Größe und Form lesbar ist.

10. Sicherheitsdokument (10) nach einem der vorhergehenden Ansprüche, **dadurch gekennzeichnet, dass** der Sicherheitsbereich (30) mit den Mikropartikeln (40) von einer wasserundurchlässigen Schutzschicht (90) bedeckt ist.

11. Sicherheitsdokument (10) nach einem der vorhergehenden Ansprüche, **dadurch gekennzeichnet, dass** das Trägersubstrat (20) aus Papier, also im Wesentlichen aus Fasern einer pflanzlichen Herkunft wie beispielsweise Cellulose oder Baumwolle, oder aus einem Polymer besteht.

12. Sicherheitsdokument (10) nach einem der vorhergehenden Ansprüche, **dadurch gekennzeichnet, dass** das Sicherheitsdokument (10) außerhalb des Sicherheitsbereichs (30) von einem handelsüblichen Drucker bedruckbar ist.

13. System zum Überprüfen von einem Sicherheitsdokument (10) nach einem der vorhergehenden Ansprüche, **dadurch gekennzeichnet, dass** ein zum Bedrucken des Sicherheitsdokuments (10) vorgesehener Drucker ein zusätzliches Erfassungsmodul zum Erkennen der Codierungen (80) und der Spezialanordnung (70) aus Mikropartikeln (40) aufweist.

14. Verfahren zum Überprüfen von einem Sicherheitsdokument (10) nach einem der Ansprüche 1 bis 12, durch datenbankgestütztes Hinterlegen von Informationen.

15. Verfahren nach Anspruch 14, **gekennzeichnet durch** datenbankgestütztes Hinterlegen von Informationen in Form von mindestens einem Identifikationsdatensatz, welcher eine Codierung (80) und eine Spezialanordnung (70) von Mikropartikeln (40) auf dem Sicherheitsdokument (10) aufweist.

16. Verfahren nach Anspruch 15, **dadurch gekennzeichnet, dass** der Identifikationsdatensatz ein hochauflösendes Bild der Spezialanordnung (70) von Mikropartikeln und ihrer Codierung (80) ist, die über eine bereitgestellte Website mit einem handelsüblichen Gerät zum Surfen im Internet erreichbar ist.

17. Verfahren nach einem der Ansprüche 14 oder 15, **dadurch gekennzeichnet, dass** die Codierung (80) und/oder die Spezialanordnung (70) mit einer optischen Detektionsvorrichtung lesbar und manuell oder automatisch mit dem in der Datenbank hinterlegten Identifikationsdatensatz (100) vergleichbar sind.

18. Verwendung eines Sicherheitsdokuments (10) nach einem der Ansprüche 1 bis 12 in einem System nach Anspruch 13 oder in einem Verfahren nach einem der Ansprüche 14 bis 17.

## Claims

1. A security document (10) comprising a substrate (20) and a security area (30) for bearing microparticles (40) which exhibit at least one coding (80) for the counterfeit-proof marking of documents and thus form a readable one-to-one special arrangement (70), wherein each microparticle (40) comprises at least one first layer (50) which forms an external side (51) of the microparticle (40) on which at least one preaffixed indication of origin (11) is arranged, wherein each microparticle (40) comprises at least one surface (41) configured such that the first layer (50) with the coding (80) is readable, **characterized in that** each microparticle (40) exhibits a randomized shape.

2. The security document (10) according to claim 1, **characterized in that** the microparticle (40) is arranged within the borders of the security area (30) pursuant to an at least one-dimensional code, particularly pursuant to a two-dimensional code.

3. The security document (10) according to claim 1 or 2, **characterized in that** the microparticle (40) is arranged and configured in the security area (30) such that microparticles (40) larger than 8 µm and colored layer thicknesses of up to 7 µm can be read in terms of their color, color sequence, position, size and shape using an optical method.

4. The security document (10) according to any one of the preceding claims, **characterized in that** none of the dimensions of any microparticle (40) exceed approximately 100 µm.

5. The security document (10) according to any one of the preceding claims, **characterized in that** each microparticle (40) comprises at least one second layer (60) arranged above the first layer (50) such that the overlapping layers with the codings (80) are readable.

6. The security document (10) according to claim 5, **characterized in that** the second layer (60) is a colored layer.

7. The security document (10) according to claim 5 or 6, **characterized in that** the microparticle (40) comprises at least one surface (41) configured such that the overlapping layers (50, 60) are discernible and/or wherein none of the dimensions of the microparticle (40) exceed approximately 50 µm, preferably approximately 20 µm, particularly preferentially approximately 8 µm.

8. The security document (10) according to any one of the preceding claims, **characterized in that** the indication of origin (11) is at least part of a hologram and/or an imprint, wherein the indication of origin (11) is at least one alphabetic character and/or at least part of a graphic symbol and/or at least part of a word/figurative mark, in particular a logo and/or trademark, or comprises such a mark, and that the indication of origin (11) can alternatively or additionally be affixed on the second layer (60).

9. The security document (10) according to any one of the preceding claims, **characterized in that** at least 5 microparticles (40) are provided, from among which all the specific properties such as color, color sequence, position, size and shape of at least one microparticle (40) is readable.

10. The security document (10) according to any one of the preceding claims, **characterized in that** the security area (30) with the microparticles (40) is coated in a waterproof protective layer (90).

11. The security document (10) according to any one of the preceding claims, **characterized in that** the substrate (20) is composed of paper, thus essentially fibers of vegetable origin such as for example cellulose or cotton, or of polymer.

12. The security document (10) according to any one of the preceding claims, **characterized in that** outside of the security area (30), the security document (10) can be printed by a standard printer.

13. A system for verifying a security document (10) according to any one of the preceding claims, **characterized in that** a printer provided for printing the security document (10) comprises an additional detection module for detecting the coding (80) and the special arrangement (70) of microparticles (40).

14. A method for verifying a security document (10) according to any one of claims 1 to 12 by means of database-supported storing of information.

15. The method according to claim 14, **characterized by** database-supported information storing in the form of at least one identification dataset comprising a coding (80) and a special arrangement (70) of microparticles (40) on the security document (10).

16. The method according to claim 15, **characterized in that** the identification dataset is a high-resolution image of the special arrangement (70) of microparticles and their coding (80) which can be accessed from a provided website using a standard internet browsing device.

17. The method according to claim 14 or 15, **characterized in that** the coding (80) and/or the special arrangement (70) can be read by an optical detection device and can be manually or automatically compared to the identification dataset (100) stored in the database.

18. The use of a security document (10) according to any one of claims 1 to 12 in a system according to claim 13 or in a method according to any one of claims 14 to 17.

## Revendications

1. Document de sécurité (10), avec un substrat de support (20) et une zone de sécurité (30) pour porter des microparticules (40) comportant au moins un codage (80) pour caractériser de façon infalsifiable des documents et ainsi former un agencement spécial (70) lisible, univoque, chaque microparticule (40) comportant au moins une première couche (50) formant un côté (51) reposant à l'extérieur de la microparticule (40) sur lequel au moins une marque d'origine (11) placée au préalable est disposée, chaque microparticule (40) comportant au moins une surface (41) conçue de telle sorte que la première couche (50) puisse être lue avec le codage (80) ; **caractérisé en ce que** chaque microparticule (40) présente une forme randomisée.

2. Document de sécurité (10) selon la revendication 1, **caractérisé en ce que** les microparticules (40) sont disposées dans les limites de la zone de sécurité (30), après un code au moins unidimensionnel, notamment après un code bidimensionnel.

3. Document de sécurité (10) selon la revendication 1 ou 2, **caractérisé en ce que** les microparticules (40) sont disposées et réalisées de telle sorte dans la zone de sécurité (30) que les microparticules (40) supérieures à 8 µm et avec des épaisseurs de couche de couleur pouvant atteindre 7 µm peuvent être lues par rapport à leur couleur, succession de couleurs, position, taille et forme au moyen d'un procédé optique.

4. Document de sécurité (10) selon l'une quelconque des revendications précédentes, **caractérisé en ce que** chacune des dimensions de chaque microparticule (40) ne dépasse pas environ 100 µm.

5. Document de sécurité (10) selon l'une quelconque des revendications précédentes, **caractérisé en ce que** chaque microparticule (40) comporte au moins une deuxième couche (60) disposée au-dessus de la première couche (50) de telle sorte que les couches superposées puissent être lues avec les codages (80).

6. Document de sécurité (10) selon la revendication 5, **caractérisé en ce que** la deuxième couche (60) est une couche de couleur.

7. Document de sécurité (10) selon la revendication 5 ou 6, **caractérisé en ce que** la microparticule (40) comporte au moins une surface (41) conçue de telle sorte que les couches (50, 60) superposées ressortent et/ou que chacune des dimensions de la microparticule (40) ne dépasse pas environs 50 µm, de préférence environ 20 µm, de façon particulièrement préférée environ 8 µm.

8. Document de sécurité (10) selon l'une quelconque des revendications précédentes, **caractérisé en ce que** la marque d'origine (11) est au moins une partie d'un hologramme et/ou d'une surimpression, la marque d'origine (11) étant au moins une lettre et/ou au moins une partie d'un signe visuel et/ou au moins une partie d'un signe visuel ou d'un mot, notamment d'un logo et/ou d'une marque distinctive, ou contenant un tel signe et que la marque d'origine (11) peut être placée en variante ou en sus sur la deuxième couche (60).

9. Document de sécurité (10) selon l'une quelconque des revendications précédentes, **caractérisé en ce qu'**au moins 5 microparticules (40) sont prévues parmi lesquelles au moins une microparticule (40) peut être lue avec toutes ses propriétés spécifiques telles que la couleur, succession de couleurs, position, taille et forme.

10. Document de sécurité (10) selon l'une quelconque des revendications précédentes, **caractérisé en ce que** la zone de sécurité (30) contenant les microparticules (40) est recouverte par une couche de protection (90) imperméable à l'eau.

11. Document de sécurité (10) selon l'une quelconque des revendications précédentes, **caractérisé en ce que** le substrat de support (20) est en papier, donc pour l'essentiel en fibres d'origine végétale telles par exemple que la cellulose ou le coton ou en polymère.

12. Document de sécurité (10) selon l'une quelconque des revendications précédentes, **caractérisé en ce que** le document de sécurité (10) peut être imprimé à l'extérieur de la zone de sécurité (30) au moyen d'une imprimante usuelle.

13. Système de vérification d'un document de sécurité (10) selon l'une quelconque des revendications précédentes, **caractérisé en ce qu'**une imprimante prévue pour imprimer le document de sécurité (10) comporte un module de détection supplémentaire pour détecter les codages (80) et l'agencement spécial (70) composé de microparticules (40).

14. Procédé de vérification d'un document de sécurité (10) selon l'une quelconque des revendications 1 à 12, par le biais d'une mise en mémoire d'informations assistée par base de données.

15. Procédé selon la revendication 14, **caractérisé par** la mise en mémoire d'informations assistée par base de données sous la forme d'au moins un jeu de données d'identification comportant un codage (80) et un agencement spécial (70) de microparticules (40) sur le document de sécurité (10).

16. Procédé selon la revendication 15, **caractérisé en ce que** le jeu de données d'identification est une image haute résolution de l'agencement spécial (70) de microparticules et de son codage (80) pouvant être atteint au moyen d'un appareil usuel de navigation sur Internet, via un site Web mis à disposition.

17. Procédé selon l'une quelconque des revendications 14 ou 15, **caractérisé en ce que** le codage (80) et/ou l'agencement spécial (70) peuvent être lus à l'aide d'un dispositif de détection optique et comparés manuellement ou automatiquement au jeu de données d'identification (100) mémorisé dans la base de données.

18. Utilisation d'un document de sécurité (10) selon l'une quelconque des revendications 1 à 12 dans un système selon la revendication 13 ou dans un procédé selon l'une quelconque des revendications 14 à 17.
